# EUROPÄISCHE PATENTSCHRIFT

(11) **EP 4 058 700 B1**
(45) Veröffentlichungstag und Bekanntmachung des Hinweises auf die Patenterteilung: **09.07.2025**
(21) Anmeldenummer: 20800883.9
(22) Anmeldetag: 03.11.2020
(51) Int. Cl.: F16K 11/044, F16K 31/06, F16K 47/08, B60T 13/68, B60T 17/00, F16K 27/02

(54) **PNEUMATISCHE VENTILVORRICHTUNG FÜR EINE DRUCKLUFTEINRICHTUNG UND GETRIEBESTEUERUNGS- ODER KUPPLUNGS-SYSTEM MIT DER PNEUMATISCHEN VENTILVORRICHTUNG**
PNEUMATIC VALVE APPARATUS FOR A COMPRESSED AIR DEVICE, AND TRANSMISSION-CONTROL OR CLUTCH SYSTEM COMPRISING THE PNEUMATIC VALVE APPARATUS
APPAREIL DE VANNE PNEUMATIQUE POUR UN DISPOSITIF À AIR COMPRIMÉ, ET SYSTÈME DE COMMANDE DE TRANSMISSION OU D'EMBRAYAGE COMPRENANT L'APPAREIL DE VANNE PNEUMATIQUE

(30) Priorität: 12.11.2019 DE 102019130523
(43) Veröffentlichungstag der Anmeldung: 21.09.2022
(73) Patentinhaber: nass magnet GmbH, 30179 Hannover (DE); ZF CV Systems Europe BV, 1170 Brussels (BE)
(72) Erfinder: KNOKE, Stefan, 30657 Hannover (DE); SPALEK, Holger, 30890 Barsinghausen (DE); WESTPHAL, Sebastian, 30880 Laatzen (DE)
(74) Vertreter: Eisenführ Speiser
(86) Internationale Anmeldenummer: PCT/EP2020/080759
(87) Internationale Veröffentlichungsnummer: WO 2021/094128

(56) Entgegenhaltungen:
- CN-U- 203 627 601
- DE-A1- 10 355 627
- DE-A1- 4 007 009
- DE-T2- 60 108 282
- JP-A- 2015 140 843

## Beschreibung

Die Erfindung betrifft eine pneumatische Ventilvorrichtung für eine Drucklufteinrichtung, insbesondere mit einem Pneumatikzylinder, insbesondere für ein automatisches Kupplungs-System oder ein automatisiertes Getriebesteuerungs- und Kupplungs-System, nach dem Oberbegriff des Anspruchs 1. Die Erfindung betrifft auch ein Getriebesteuerungs- oder Kupplungs-System mit der pneumatischen Ventilvorrichtung, insbesondere für Nutzfahrzeuge, wie einen Lastkraftwagen oder einen Personenbus.

Eine solche pneumatische Ventilvorrichtung umfasst insbesondere ein pneumatisches Magnetventil. Ein Magnetventil kann als ein elektromagnetisch betriebenes pneumatisches Magnetventil dargestellt werden, welches beispielsweise einen Permanentmagneten im Rahmen eines Aktuators nutzt, um einen Ventilkörper in einer vorbestimmten Position zu halten und um so verschiedene Schaltzustände bei der Steuerung von Druckluft zu realisieren. Ein pneumatisches Magnetventil ist beispielsweise aus WO 97/44580 A1 oder aus EP 2 818 779 A1 bekannt.

JP 2015 140843 A bzw. DE 601 08 282 T2 beschreiben jeweils eine pneumatische Ventilvorrichtung als ein Elektromagnetventil mit einer Austrittsöffnung bzw. einem Auslassanschluss, die/der mit einem bereichsweise sich aufweitenden Austrittsweg bzw. Entlüftungskanal von einem Ventilsitz bzw. Ventilmechanismusabschnitt im Ventilkörper ausgebildet ist.

Ein solches pneumatisches Magnetventil hat insbesondere einen Gehäusekörper mit einem Versorgungskanal, einem Abnehmerkanal und einem Entlüftungskanal. Der Gehäusekörper, insbesondere mit wenigstens einem Ein- und wenigstens einem Auslass, umgibt dabei einen Ventilraum, in dem ein Ventilkörper gegenüber einem Entlüftungs-Ventilsitz zum Entlüftungskanal und einem Versorgungs-Ventilsitz zum Versorgungskanal, mittels eines Aktuators, entgegen der Kraft einer Ventilfeder, entlang einer Ventilachse bewegbar ist. Der Ventilkörper oder dergleichen Ventilelement dient in diesem Sinne zum Öffnen und Schließen des Ventils.

Der Aktuator kann insbesondere zusammenwirken mit einer Ventilfeder, welche beispielsweise entgegengesetzt zur Wirkrichtung des Aktuators, eine Kraft auf den Ventilkörper ausübt und somit bestimmt, ob das Ventil im bestromten Zustand, beispielsweise eines Magneten, geöffnet oder geschlossen ist. Ein Ventilkörper kann in einer ersten Stellung einen Ventilraum und einen Entlüftungs-Ventilsitz zu dem Entlüftungskanal öffnen und in einer zweiten Stellung einen Versorgungskanal zu dem Versorgungs-Ventilsitz und dem Ventilraum öffnen.

DE 40 07 009 A1 beschreibt ein Magnetventil, das aus einem den elektrischen Betätigungs- oder Steuerteil bildenden Halbblock und einem pneumatischen Halbblock, der den Ventilteil umfasst, besteht. Ein Ventilelement ist über eine kurze Entfernung in Richtung seiner Achse zwischen zwei einander gegenüberliegenden Ventilsitzen und innerhalb des Hohlraumes verstellbar. Die Ventilsitze umschließen jeweils eine Öffnung einer Leitung, von denen die eine mit einem Ausflusskanal und die andere mit einem Einlasskanal für ein Druckfluid in Verbindung steht. Beide Kanäle münden an derselben Fläche des Halbblockes. Ein dritter Kanal, der einen Austrittskanal bildet, verbindet den Hohlraum ebenfalls mit der Oberfläche. Die erforderliche Länge des Stellweges des Ventilkörpers kann durch eine Messung des Druckes oder der Durchflussmenge des zwischen den Kanälen zirkulierenden Fluides ermittelt werden.

Eine maximale Durchflussrate einer Druckluft durch das pneumatische Magnetventil kann wesentlich durch eine lichte Weite eines Ventildurchlasses limitiert sein, beispielsweise durch eine lichte Weite des Entlüftungs-Ventilsitz-Durchlasses.

Des Weiteren kann der Stromverbrauch des Aktuators den Öffnungsgrad und somit ebenfalls die Durchflussrate des Magnetventils beeinflussen, über dessen maximal aufwendbare magnetische Kraft. Dies kann bedeuten, dass herkömmliche Magnetventile bei gegebener Durchflussrate eine bestimmte Mindestgröße sowie einen Mindeststromverbrauch besitzen.

Grundsätzlich ist in EP 2 818 779 A1 ein Magnetventil mit einer Diffusorcharakteristik beschrieben. Ein solches Ventil ist noch verbesserbar.

Wünschenswert ist es, die Durchflussrate eines pneumatischen Magnetventils, insbesondere hinsichtlich einer Verwendung mit einem Pneumatikzylinder, insbesondere bei einem Getriebesteuerungs- oder Kupplungs-System, zu verbessern bzw. erhöhen, insbesondere beim Entlüften. Insbesondere sollte dies möglich sein, ohne dass dabei eine lichte Weite eines Ventildurchlasses und/oder die Stromaufnahme des Aktuators wesentlich erhöht werden müssten - so kann eine möglichst kompakte Bauform erreicht werden selbst bei verbesserter bzw. erhöhter Durchflussrate. Bisher bekannte pneumatische Magnetventile sind diesbezüglich noch verbesserbar.

An dieser Stelle setzt die Erfindung an, deren Aufgabe es ist eine pneumatische Ventilvorrichtung, insbesondere mit einem Pneumatikzylinder, anzugeben, bei welcher eine Durchflussrate eines pneumatischen Magnetventils, insbesondere hinsichtlich einer Verwendung mit einem Pneumatikzylinder, vorzugsweise bei einem Getriebesteuerungs- oder Kupplungs-System, verbessert ist.

Die Aufgabe wird gelöst durch eine pneumatische Ventilvorrichtung, insbesondere mit einem Pneumatikzylinder, des Anspruchs 1.

Eine solche pneumatische Ventilvorrichtung, insbesondere mit einem Pneumatikzylinder, insbesondere für ein automatisches Kupplungs-System oder ein automatisiertes Getriebesteuerungs- und Kupplungs-System, weist auf:
- ein pneumatisches Magnetventil mit einem Gehäusekörper mit einem Versorgungskanal, einem Abnehmerkanal und einem Entlüftungskanal, wobei
- der Gehäusekörper einen Ventilraum umgibt, in dem ein Ventilkörper gegenüber einem Entlüftungs-Ventilsitz zum Entlüftungskanal und einem Versorgungs-Ventilsitz zum Versorgungskanal mittels eines Aktuators, entgegen der Kraft einer Ventilfeder, entlang einer Ventilachse bewegbar ist, wobei
- der Ventilkörper in einer ersten Stellung den Ventilraum und den Entlüftungs-Ventilsitz zu einem Entlüftungskanal öffnet und in einer zweiten Stellung einen Versorgungskanal zu dem Versorgungs-Ventilsitz und dem Ventilraum öffnet.

Erfindungsgemäß ist bei der pneumatischen Ventilvorrichtung vorgesehen, dass der Gehäusekörper einen Diffusor aufweist, der sich an den Entlüftungs-Ventilsitz zum Entlüftungskanal anschließt, wobei sich ein Diffusorkanal des Diffusors vom Entlüftungs-Ventilsitz zum Entlüftungskanal im Querschnitt aufweitet, und
der Diffusorkanal quer zur Ventilachse verläuft, und ein Entlüftungs-Ventilsitz-Durchlass eine lichte Weite hat, die geringer ist als eine zweite lichte Weite des Diffusorkanals.

Erfindungsgemäß ist auch vorgesehen, dass der Diffusorkanal
- einen ersten Abschnitt mit zylindrischer und/oder stumpfer konischer Ausbildung aufweist, und/oder
- einen zweiten Abschnitt mit einer geschwungenen Ausbildung aufweist,
   und
- im Diffusorkanal gegenüber dem Entlüftungs-Ventilsitz-Durchlass ein Strömungs-Prallelement als ein dornförmiges Strömungs-Leitelement auf der Ventilachse ausgebildet ist.

Der Ventilkörper, welcher gegenüber einem Entlüftungs-Ventilsitz und einem Versorgungs- Ventilsitz, mittels eines Aktuators, entgegen der Kraft einer Ventilfeder, entlang einer Ventilachse bewegbar gelagert ist, ermöglicht zwei Schaltstellungen des Magnetventils.

Mit anderen Worten ist gemäß dem Konzept der Erfindung vorgesehen, dass der Entlüftungskanal in den Gehäusekörper integriert ist und der Entlüftungskanal dabei einen Diffusor aufweist, der sich quer an den Entlüftungs-Ventilsitz anschließt. Außerdem weitet sich ein Diffusorkanal des Diffusors vom Entlüftungs-Ventilsitz zum Entlüftungskanal-Auslass im Querschnitt auf wobei der Entlüftungskanal quer zur Ventilachse verläuft. Der Entlüftungs-Ventilsitz-Durchlass besitzt eine lichte Weite, die geringer ist als eine zweite lichte Weite des Diffusorkanals.

Die Erfindung geht von der Überlegung aus, dass Luft bei einer Querschnittsaufweitung beschleunigt wird. Dies ermöglicht ein schnelleres Entlüften des Magnetventils auch bei mindestens gleichbleibendem Durchmesser des Entlüftungs-Ventilsitz-Durchlasses. Die Erfindung hat erkannt, dass der Stromverbrauch mit dem Öffnungsgrad vom Entlüftungs- Ventilsitz zum Entlüftungskanal-Auslass beeinflusst wird.

Die Erfindung hat erkannt, dass durch den Einsatz eines Diffusors eine verbesserte Durchflussrate erzielt werden kann, insbesondere dazu der Stromverbrauch des Magnetventils verringert werden kann. Darüber hinaus hat die Erfindung erkannt, dass durch einen quer --insbesondere orthogonal-- zur Ventilachse angebrachten, Diffusor eine verbesserte Durchflussrate ermöglicht wird. Mit Hilfe der Luftumlenkung infolge des quer --insbesondere orthogonal-- zur Ventilachse angebrachten Diffusors und durch die spezielle Formgebung der Entlüftung mit dem Diffusor zum Entlüftungskanal wird eine Beschleunigung der Strömungsluft vom Entlüftungs-Ventilsitz zum Entlüftungskanal über den quer angebrachten Diffusor erreicht. Dies führt zu einer deutlich höheren effektiven Entlüftungs-Nennweite.

Des Weiteren wird eine den Stromverbrauch senkende Durchflussrate bei geringerem Bauraum ermöglicht. Der Bauraum ist insbesondere angepasst auf die Verwendung der pneumatischen Ventilvorrichtung für eine Drucklufteinrichtung, insbesondere mit einem Pneumatikzylinder, insbesondere für ein automatisches Kupplungs-System oder ein automatisiertes Getriebesteuerungs- und Kupplungs-System.

Die Erfindung führt zur Lösung der Aufgabe auch auf ein System des Anspruchs 14, nämlich ein System aus einem Pneumatikzylinder, für eine Drucklufteinrichtung, insbesondere eine Getriebebremse, und einer pneumatischen Ventilvorrichtung gemäß der Erfindung, nämlich mit einem pneumatischen Magnetventil mit einem Gehäusekörper mit einem Versorgungskanal, einem Abnehmerkanal und einem Entlüftungskanal. Erfindungsgemäß ist vorgesehen, dass der Versorgungskanal des pneumatischen Magnetventils mit einem Druckraum des Pneumatikzylinders zur Entlüftung und Belüftung mit Druckluft verbunden ist.

Vorteilhaft ist der Versorgungskanal des pneumatischen Magnetventils mit einem Druckraum des Pneumatikzylinders zur Entlüftung in der ersten Stellung des Ventilkörpers des Magnetventils verbunden und zur Belüftung in der zweiten Stellung des Ventilkörpers des Magnetventils verbunden.

Die Erfindung führt zur Lösung der Aufgabe auch auf ein Getriebesteuerungs- oder Kupplungs-System des Anspruchs 15 nämlich mit einer pneumatischen Ventilvorrichtung gemäß der Erfindung und/oder einem System gemäß der Erfindung.

Bevorzugte Weiterbildungen der Erfindung sind den Unteransprüchen zu entnehmen, und geben im Einzelnen vorteilhafte Möglichkeiten an, das oben erläuterte Konzept, im Rahmen der Aufgabenstellung sowie hinsichtlich weiterer Vorteile, zu realisieren.

Vorzugsweise entspricht der allgemeine Aufbau des Magnetventils dem eines 3/2-WegeVentils.

Vorzugsweise ist bei der Ventilvorrichtung in der ersten Stellung der Abnehmerkanal über den Ventilraum zum Entlüftungskanal geöffnet und der Versorgungs-Ventilsitz geschlossen. Vorzugsweise ist --zusätzlich oder alternativ-- bei der Ventilvorrichtung in der zweiten Stellung der Versorgungskanal über den Ventilraum zum Abnehmerkanal geöffnet und der Entlüftungs-Ventilsitz geschlossen.

Vorzugsweise ist vorgesehen, dass in der ersten Stellung der Ventilkörper den Ventilraum über den Entlüftungsventilsitz, hin zu dem Entlüftungskanal öffnet und den Versorgungskanal sperrt. Vorzugsweise ist weiterhin vorgesehen, dass in der zweiten Stellung der Ventilkörper den Versorgungskanal zu dem Versorgungs-Ventilsitz öffnet und den Entlüftungskanal über den Entlüftungsventilsitz sperrt.

Vorteilhaft weist die Ventilvorrichtung im Gehäusekörper eine Wandung auf, welche den Ventilraum umgibt, wobei der Diffusorkanal in der Wandung verläuft, sodass der Diffusor im Gehäusekörper integriert ist. Vorteilhaft ist, dass der Diffusorkanal vom Entlüftungs- Ventilsitz ausgehend quer zur Ventilachse verläuft.

Vorzugsweise hat der Entlüftungs-Ventilsitz einen Entlüftungs-Ventilsitz-Durchlass mit einer ersten lichten Weite und einen Entlüftungs-Ventilsitz-Auslass mit einer zweiten lichten Weite. Vorteilhaft liegt die erste und zweite lichte Weite unter einem bestimmten Wert.

Insbesondere kann der Entlüftungs-Ventilsitz eine lichte Weite haben, die größer ist als eine Belüftungsnennweite des Versorgungskanals. Vorzugsweise hat der Entlüftungs-Ventilsitz einen Entlüftungs-Ventilsitz-Durchlass und einen Entlüftungs-Ventilsitz-Auslass jeweils mit einer lichten Weite, die größer ist als die der Belüftungsnennweite des Versorgungskanals.

Eine erste lichte Weite des Diffusorkanals, benachbart zum Entlüftungs-Ventilsitz-Auslass, weist eine erste lichte Weite im Bereich zwischen einem ersten bestimmten Wert und einem zweiten bestimmten Wert auf; der erste und zweite bestimmte Wert liegen beispielsweise im mm-Bereich.

Eine zweite lichte Weite des Diffusorkanals, benachbart zum ersten Auslass des Entlüftungskanals, weist eine zweite lichte Weite im Bereich zwischen einem weiteren ersten bestimmten Wert und einem weiteren zweiten bestimmten Wert auf; der erste und zweite weitere bestimmte Wert liegen beispielsweise im mm-Bereich.

Der Diffusorkanal weist ein Strömungs-Prallelement und/oder Strömungsleitelement auf. Vorzugsweise ist die erste lichte Weite des Diffusorkanals benachbart zum Entlüftungs- Ventilsitz-Auslass geringer als die zweite lichte Weite des Diffusorkanals benachbart zum ersten Auslass des Entlüftungskanals.

Der Entlüftungs-Ventilsitz besitzt entlang einer Ventilachse eine Länge im Bereich von einem ersten bestimmten Längenwert und einem zweiten bestimmten Längenwert. Vorteilhaft besitzt der Diffusorkanal quer zur Ventilachse eine Länge im Bereich eines ersten und zweiten Längenwertes; der erste und zweite Längenwert liegen vorzugsweise im mm-Bereich.

Gemäß der Erfindung ist auf der Innenwand des Diffusorkanals, gegenüber dem Entlüftungs-Ventilsitz-Durchlass, ein dornförmiges Strömungs-Leitelement entlang der Ventilachse angebracht. Vorteilhaft ist --zusätzlich oder alternativ-- in Weiterbildiung der Erfindung vorgesehen, dass im Diffusorkanal, dem Entlüftungs-Ventilsitz-Durchlass gegenüber, eine Innenwand des Diffusorkanals als das Strömungs-Prallelement ausgebildet ist.

In einer Weiterbildung kann das Strömungs-Prallelement eine gegen eine Entlüftungsrichtung zum Entlüftungs-Ventilsitz gerichtete Strömungskante sein, insbesondere eine Strömungsspitze oder ein Strömungssteg sein.

Vorzugsweise weist der Gehäusekörper außenseitig eine obere Dichtungsnut und eine untere Dichtungsnut auf, wobei der Diffusor in einer Ebene zwischen der oberen und unteren Dichtungsnut anschließt.

Erfindungsgemäß weist der Diffusorkanal einen ersten Abschnitt mit zylindrischer und/oder stumpfer konischer Ausbildung auf, und/oder weist der Diffusorkanal einen zweiten Abschnitt mit einer geschwungenen Ausbildung auf, insbesondere in Form eines Horns.

Vorteilhaft verläuft der Ventilraum entlang der Ventilachse und der Diffusorkanal verläuft radial dazu, insbesondere verläuft der Diffusorkanal radial mit senkrecht zur Ventilachse ausgerichteten Teilabschnitten. Grundsätzlich ist jedoch jede Ausrichtung des Diffusorkanals quer, also insbesondere schräg oder senkrecht zur Ventilachse vorteilhaft

In einer bevorzugten Weiterbildung weist der Diffusor wenigstens einen ersten radial ausgerichteten Diffusorkanal entlang eines ersten Diffusorwinkels auf. In einer bevorzugten Weiterbildung weist der Diffusor einen ersten radial ausgerichteten Diffusorkanal entlang eines ersten Diffusorwinkels und einen zweiten radial ausgerichteten Diffusorkanal entlang eines zweiten Diffusorwinkels auf. Vorteilhaft liegen sich ein erster und zweiter Diffusorkanal symmetrisch zur Ventilachse gegenüber.

In einer anderen vorteilhaften Weiterbildung ist der Diffusorkanal ringförmig um die Ventilachse angeordnet.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnung; diese zeigt in:

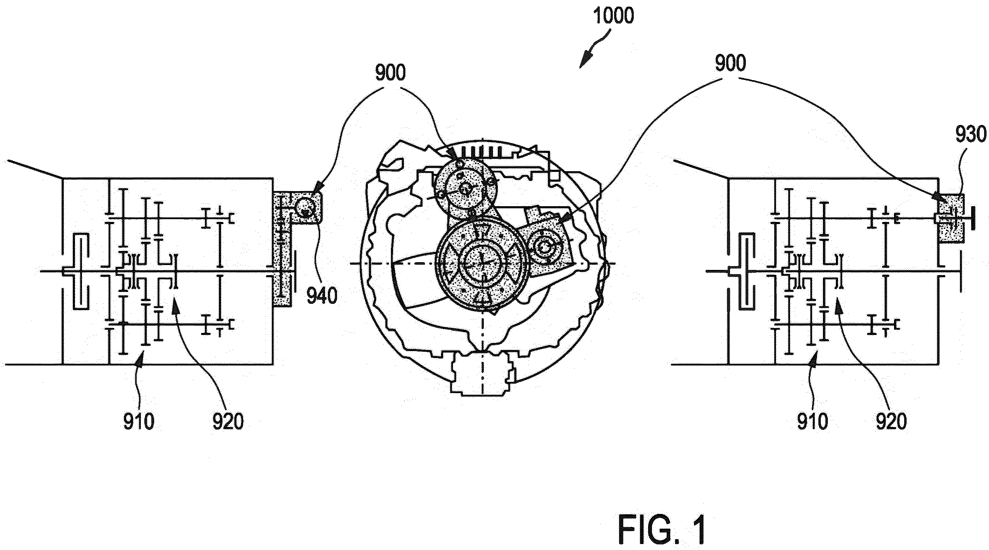

- FIG. 1: eine symbolische Darstellung eines Getriebes beispielhaft für ein AMT-System (Automated Manual Transmission) mit einer Getriebebremse und einem dort eingezeichneten Symbol für ein pneumatisches Magnetventil gemäß einer bevorzugten Ausführungsform als bevorzugtes Beispiel für eine pneumatische Ventilvorrichtung für eine Drucklufteinrichtung;

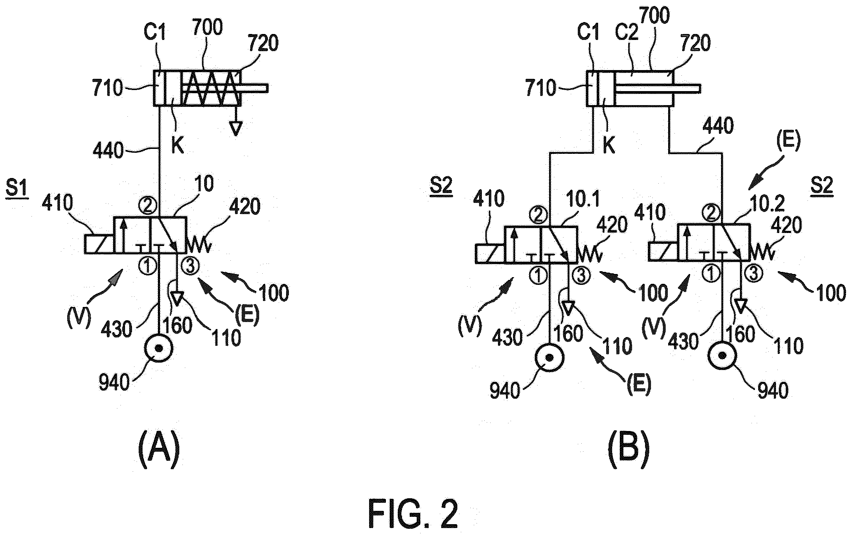

- FIG. 2: in Ansicht (A) einen ersten Schaltplan einer ersten Anordnung mit einem pneumatischen Magnetventil in Form eines 3/2-Wegeventils gemäß einer ersten Ausführungsform und in Ansicht (B) einen zweiten Schaltplan einer zweiten Anordnung mit einem pneumatischen Magnetventil in Form eines 3/2-Wegeventils gemäß einer zweiten Ausführungsform jeweils für das in FIG. 1 gezeigte AMT-System mit jeweils einer bevorzugten Ausführungsform einer pneumatischen Ventilvorrichtung;

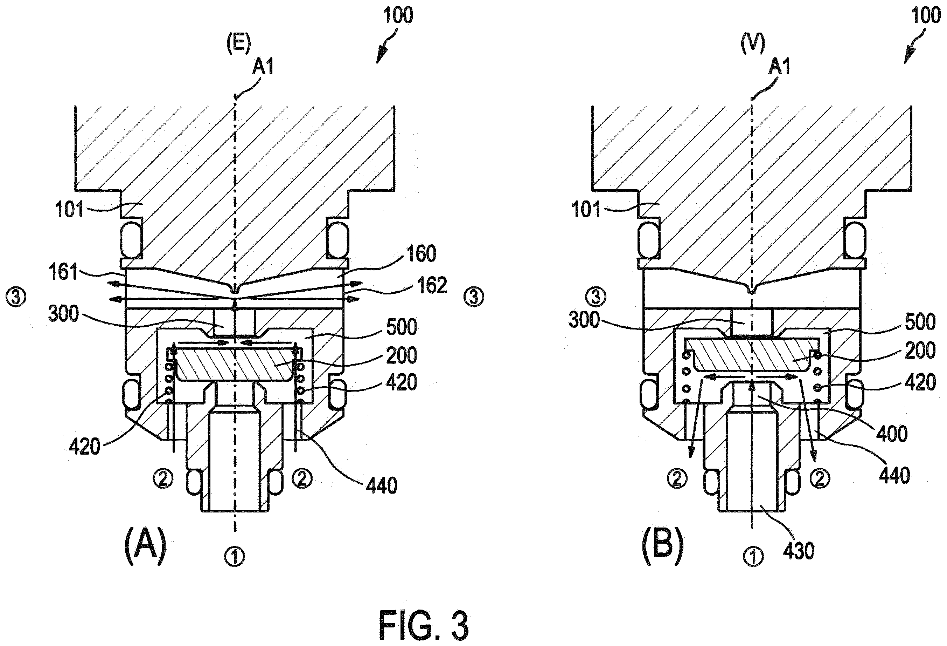

- FIG. 3: in einer ersten Ansicht (A) eine pneumatische Ventilvorrichtung hier in Form eines des pneumatischen Magnetventils in Form eines 3/2-Wegeventils, die eine Entlüftungsstellung zeigt, in welcher der Ventilkörper in einer ersten Stellung (E) den Ventilraum und den Entlüftungsventilsitz zu einem Entlüftungskanal öffnet, und in einer zweiten Ansicht (B) eine pneumatische Ventilvorrichtung hier in Form eines des pneumatischen Magnetventils in Form eines 3/2-Wegeventils, in welcher in einer zweiten Stellung (V) der Ventilraum und der Versorgungsventilsitz von einem Versorgungskanal, hin zu einem Abnehmerkanal geöffnet sind;

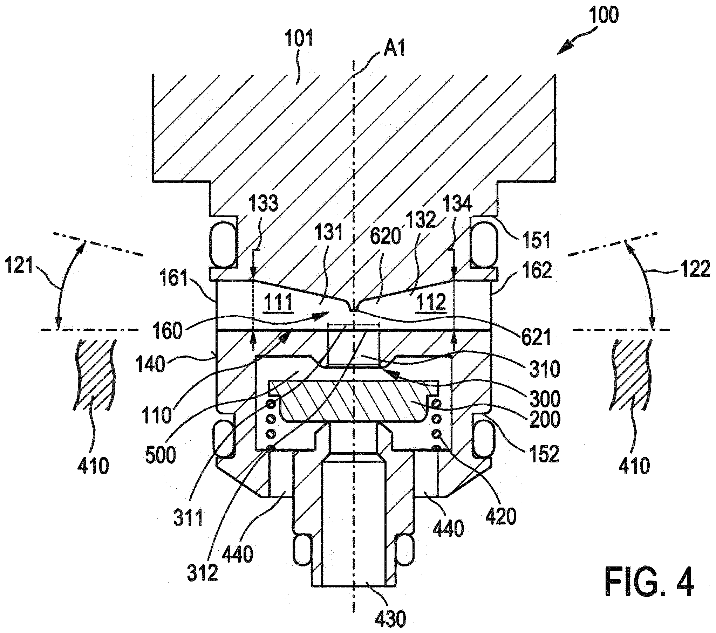

- FIG. 4: die Struktur einer pneumatischen Ventilvorrichtung hier in Form eines des pneumatischen Magnetventils in Form eines 3/2-Wegeventilss gemäß der besonders bevorzugten Ausführungsform in der ersten Stellung (E) wie sie in FIG. 3A zum Entlüften gezeigt ist, mit dem Diffusor, der sich an den Entlüftungsventilsitz zum Entlüftungskanal anschließt, wobei sich der Diffusorkanal des Diffusors vom Entlüftungsventilsitz zum Entlüftungskanal im Querschnitt aufweitet.

FIG. 1 zeigt symbolisch ein Getriebe mit einer Getriebebremse 900 als Beispiel für ein automatisches Kupplungs-System oder ein automatisiertes Getriebesteuerungs- und Kupplungs-System 1000; hier also mit einer Drucklufteinrichtung in Form einer Getriebebremse 900 für das Getriebe 910.

Üblicherweise wird ein nicht näher dargestelltes Drehmoment über Wellen mit einer Anzahl von Zahnradzügen 920, d. h. hier einer Eingangswelle des Getriebes 910 auf eine Vorgelegewelle und von dort auf eine Ausgangswelle übertragen. Auf den Wellen befindet sich dabei die Anzahl der Gänge entsprechende Anzahl von Zahnradzügen 920. Eine Getriebebremse 900 lässt sich beispielsweise pneumatisch mittels zwei Zweiwegeventilen oder mittels einem 3/2-Wegeventil betätigte Bremse 930 konstruieren, die über eine feste Übersetzung mit der Vorgelegewelle verbunden ist. Insbesondere ein solches 3/2-Wegeventil wird beispielhaft als ein pneumatisches Magnetventil gemäß dem Konzept der Erfindung anhand der FIG. 2 bis FIG. 4 erläutert.

Das Getriebe 910 mit der Getriebebremse 900 ist hier lediglich beispielhaft gezeigt und umfasst weiter wenigstens eine Druckluftquelle 940, welche als Energiespeicher für die pneumatisch betriebenen Komponenten dient. Üblicherweise wird das Getriebe 910 in nicht näher dargestellter Weise von einem Getriebe-Aktuator als Stellglied angesteuert und von einer Schalthebeleinheit über einen Kabelstrang für Fahrzeugdaten mit einem einzulegenden Gang beaufschlagt. Des Weiteren wird eine Kupplung mittels eines Kupplungs-Aktuators als Stellglied angesteuert. Ein AMT-Magnetventil kann dabei, je nach Bedarf, als Kupplungs-Aktuator oder als Getriebe-Aktuator oder als Pilotventil zur Vorsteuerung eben dieser Komponenten zum Einsatz kommen. Auch ein solches AMT-Magnetventil kann beispielhaft als ein pneumatisches Magnetventil gemäß dem Konzept der Erfindung realisiert sein; entsprechend gilt die nachfolgende Beschreibung eines 3/2-Wegeventils in übertragbarer Weise beispielhaft auch für ein solches AMT-Magnetventil.

Insofern ist die nachfolgende Beschreibung eines Getriebesteuerungs- und Kupplungs- System 1000; hier also mit einer Drucklufteinrichtung in Form einer Getriebebremse 900 für das Getriebe 910 mit einem Druckzylinder 700 der FIG. 2 und einem pneumatischen Magnetventil 10 exemplarisch bespielhaft zu verstehen für eine Vielzahl von Anwendungen einer hier so erläuterten pneumatischen Ventilvorrichtung 100 für eine Drucklufteinrichtung.

FIG. 2 zeigt jeweils für das in FIG. 1 gezeigte Getriebesteuerungs- und Kupplungs-System 1000; hier also mit einer Drucklufteinrichtung in Form einer Getriebebremse 900 für das Getriebe 910 jeweils eine bevorzugte Ausführungsform einer pneumatischen Ventilvorrichtung 100 mit einem pneumatischen Magnetventil 10 in Form eines 3/2-Wegeventils in einer ersten Ausführungsform in Ansicht (A) bzw. mit zwei pneumatischen Magnetventilen jeweils in Form eines 3/2-Wegeventils in einer zweiten Ausführungsform in Ansicht (B) - in beiden Ausführungsformen ist die pneumatische Ventilvorrichtung 100 als System mit einem Druckzylinder 700, beispielsweise für die in FIG. 1 gezeigte Getriebebremse 900 realisiert.

Das pneumatische Magnetventil in Form eines 3/2-Wegeventils ist als pneumatisches Schaltsymbol gezeigt. Das Schaltsymbol entspricht dem eines 3/2-Wege-Ventils mit einem Aktuator 410 in Form eines elektrisch bestromten Magneten zur Betätigung eines Ventilkörpers des 3/2-Wegeventils gegen die Kraft einer Ventilfeder 420 in zwei Schaltzuständen, die in dem Symbol des pneumatischen Magnetventils 10 als 3/2-Wegeventil erkennbar sind.

Das pneumatische Magnetventil 10 in Form eines 3/2-Wegeventils weist einen ersten Eingang (1), im Weiteren "Versorgungs-Anschluss" genannt, und einen zweiten Eingang (2), im Weiteren "Abnehmer-Anschluss" genannt sowie einen Ausgang (3), im Weiteren "Entlüftungs-Anschluss" genannt, auf.

Gezeigt in Ansicht (A) und Ansicht (B) sind außerdem zwei mögliche Schaltstellungen des Ventils. Dabei ist in einer ersten Stellung (E) der Abnehmer-Anschluss (2) mit dem Entlüftungs-Anschluss (3) pneumatisch verbunden, während der Versorgungs-Anschluss (1) gesperrt ist. In einer zweiten Stellung des Ventils (V) ist der Entlüftungs-Anschluss (3) gesperrt, während ein Durchflussweg zwischen Versorgungs-Anschluss (1) und Abnehmer-Anschluss (2) in Nebenschlussschaltung ermöglicht wird.

In FIG. 2 weist die Ventilvorrichtung 100 das pneumatische Magnetventil 10 auf, das wiederum einen Versorgungskanal 430, einen Abnehmerkanal 440 und einen Entlüftungskanal 160 hat oder mit diesen verbunden ist. Wie in FIG. 3 und FIG. 4 näher dargestellt ist, ist in einem Gehäusekörper 101 des pneumatischen Magnetventils 10 der Versorgungskanal 430 und/oder der Abnehmerkanal 440 und/oder der Entlüftungskanal 160 integriert.

In Ansicht (A) der FIG. 2 ist der Versorgungskanal 430 des pneumatischen Magnetventils 10 mit einem Druckraum 710 des Pneumatikzylinders 700 zur Entlüftung und Belüftung mit Druckluft verbunden. In Ansicht (B) der FIG. 2 ist der Versorgungskanal 430 des ersten pneumatischen Magnetventils 10.1 (links dargestellt) mit einem ersten Druckraum 710 des Pneumatikzylinders 700 zur Entlüftung und Belüftung mit Druckluft verbunden und der Versorgungskanal 430 des zweiten pneumatischen Magnetventils 10.2 (rechts dargestellt) mit einem zweiten Druckraum 720 des Pneumatikzylinders 700 zur Entlüftung und Belüftung mit Druckluft verbunden.

Insbesondere ist jeweils vorgesehen zur Entlüftung die erste Stellung E des Ventilkörpers des Magnetventils 10, 10.1, 10.2 und zur Belüftung die zweite Stellung V des Ventilkörpers des Magnetventils 10, 10.1, 10.2.

Konkret ist bei einer Ventilanordnung 100 gemäß Ansicht (A) der FIG. 2 vorgesehen, dass Druckluft aus der Druckluftquelle 940 beim Einschalten --im dargestellten Schaltzustand von S1-- in den Abnehmerkanal 440 und von dort aus in den Pneumatikzylinder 700 strömt, d. h. in die Druckraum 710, der hier als Druckkammer C1 bezeichnet ist; Schaltzustand S1, (V).

Beim Entlüften --Schaltzustand S2, (E)-- entweicht Druckluft aus dem Druckraum 720 des Pneumatikzylinders 700, der hier als Druck- und Feder-Kammer C2 bezeichnet ist, über den Entlüftungskanal 160 in die Atmosphäre.

Vorteilhaft für die Anwendung hier --z. B. die Getriebebremse 900 gemäß FIG. 1-- ist, dass die Druckluft deutlich schneller entweichen kann als zugeführt wird. Der Kolben K im Pneumatikzylinder 700 als federrückstellender Zylinder wird mit dem Magnetventil 10, 10.1, 10.2 gemäß dem Konzept der Erfindung schneller zurückgeschoben, da dies pneumatische Ventilvorrichtung 100 einen hier symbolisch dargestellten Diffusor 110 aufweist am Entlüftungskanal 160. Dadurch wird ein separates zusätzliches Schnellentlüftungsventil nicht mehr benötigt, wie es sonst üblicherweise zum Einsatz kommt.

Bei einer Ventilvorrichtung 100 mit einem ersten und zweiten pneumatischen Magnetventil 10.1, 10.2 gemäß Ansicht (B) der FIG. 2 ist ein doppeltwirkender Pneumatikzylinder 700 vorgesehen; d. h. es strömt Druckluft beim Betätigen des ersten Magnetventiles 10.1 im Schaltzustand S1 in den ersten Druckraum 710 des Pneumatikzylinder 700, der hier als Druckkammer C1 bezeichnet ist; Schaltzustand S1, (V).

Dabei wird die Druckluft aus der gegenüberliegenden Kammer des zweiten Druckraum 720 des Pneumatikzylinder 700 durch den Entlüftungskanal 160 des zweiten pneumatischen Magnetventils 10.2 herausgedrückt; Schaltzustand S2, (E). Um einen Staudruck zu vermeiden und ein schnelles Verschieben des Kolbens K im Pneumatikzylinder 700 zu erreichen hilft die erfindungsgemäße Ausführung und ermöglicht eine schnellere Entlüftung. Dadurch ist eine höhere Dynamik möglich. Dies wird z. B. beim Schalten von Gängen über einen Pneumatikzylinder 700 gemäß der Anordnung in Ansicht (B) der FIG. 2 erreicht.

Entsprechend wird in umgekehrter Richtung Druckluft aus der Kammer des ersten Druckraums 710 des Pneumatikzylinders 700 durch den Entlüftungskanal 160 des ersten pneumatischen Magnetventils 10.1 herausgedrückt; Schaltzustand S1, (E).

FIG. 3 zeigt in Ansicht (A) und in Ansicht (B) jeweils das gleiche pneumatische Magnetventil 10 --etwa zur Realisierung der zuvor in FIG. 2 beschriebenen ersten und zweiten pneumatischen Magnetventils 10.1, 10.2-- in Form eines 3/2-Wegeventils in einer ersten und einer zweiten Schaltstellung zur Erläuterung der Funktionsweise und des Aufbaus des pneumatischen Magnetventils in Form eines 3/2-Wegeventilss. Der Querschnitt beider beispielhaft dargestellten Abbildungen des Magnetventils 10 ist entlang der axialen Richtung der Ventilachse A1.

Erkennbar ist hier für eine pneumatische Ventilvorrichtung 100 für eine Drucklufteinrichtung, insbesondere mit einem Pneumatikzylinder 700, insbesondere für ein automatisches Kupplungs-System oder ein automatisiertes Getriebesteuerungs- und Kupplungs-System 1000 der FIG. 2 bzw. FIG. 1 ein pneumatisches Magnetventil 10 mit einem Gehäusekörper 101 mit einem Versorgungskanal 430, einem Abnehmerkanal 440 und einem Entlüftungskanal 160 dargestellt.

Dabei umgibt der Gehäusekörper 101 einen Ventilraum 500, in dem ein Ventilkörper 200 gegenüber einem Entlüftungs-Ventilsitz 300 zum Entlüftungskanal 160 und einem Versorgungs-Ventilsitz 400 zum Versorgungskanal 430, mittels eines Aktuators 410, entgegen der Kraft einer Ventilfeder 420, entlang einer Ventilachse A1 bewegbar ist.

Dabei öffnet der Ventilkörper in einer ersten Stellung E -Ansicht (A) der FIG. 3-- den Ventilraum 500 und den Entlüftungs-Ventilsitz 300 zu einem Entlüftungskanal 160 und in einer zweiten Stellung V --Ansicht (B) der FIG. 3-- öffnet dieser einen Versorgungskanal 430 zu dem Versorgungs-Ventilsitz 400 und dem Ventilraum 500.

Gemäß dem Konzept der Erfindung weist der Gehäusekörper 101 einen Diffusor 110 auf, der sich an den Entlüftungs-Ventilsitz 300 zum Entlüftungskanal 160 anschließt, wobei sich ein Diffusorkanal 111 des Diffusors vom Entlüftungs-Ventilsitz 300 zum Entlüftungskanal 160 im Querschnitt aufweitet.

Der Diffusorkanal 111 verläuft vorteilhaft gemäß dem Konzept der Erfindung quer zur Ventilachse A1 und ein Entlüftungs-Ventilsitz-Durchlass 310 hat eine lichten Weite 311, die geringer ist als eine zweite lichte Weite 131, 132, 133 des Diffusorkanals 111.

Diese Lösung gemäß dem Konzept der Erfindung ist des Weiteren verbessert, dadurch, dass der Entlüftungskanal 160 und der Diffusor 110 des Magnetventiles 10 in dessen Gehäusekörper 101 untergebracht ist. Zudem weist der Entlüftungs-Ventilsitz 300 einen Entlüftungs-Ventilsitz-Durchlass 310 und einen Entlüftungs-Ventilsitz-Auslass 312 auf, die in FIG. 4 näher dargestellt sind. Diese haben nämlich eine lichte Weite, die größer als eine Belüftungsnennweite des Versorgungskanals 430 ist. Das heißt, konkret hat der Entlüftungs-Ventilsitz 300 einen Entlüftungs-Ventilsitz-Durchlass 310 und einen Entlüftungs- Ventilsitz-Auslass 312 jeweils mit einer lichten Weite, die größer ist als eine Belüftungsnennweite des Versorgungskanals 430.

So ist in synergetischer Wirkung mit Hilfe der Luftumlenkung vom Entlüftungs-Ventilsitz 300 zum Entlüftungskanal 160 und dem Diffusor 110 --also durch die spezielle Anordnung und ggfs. Formgebung des Entlüftungskanales 160-- eine Beschleunigung der strömenden Druckluft erreicht, die zu einer deutlich höheren effektiven Entlüftungs-Nennweite führt. Dies wird im Detail aus den folgenden Erläuterungen deutlich erklärt.

In FIG. 3 ist in Ansicht (A) eine erste Stellung (E) des pneumatischen Magnetventils in Form eines 3/2-Wegeventils 10 gezeigt, bei welcher der Ventilkörper 200 den Ventilraum 500 über einen Entlüftungsventilsitz 300 zu einem Entlüftungskanal 160 hin öffnet. Diese "Entlüftungsstellung" E entspricht der pneumatischen Verbindung von Abnehmer-Anschluss 2 und Entlüftungs-Anschluss 3, wie sie in FIG. 3 Ansicht (A) zu sehen ist. Die abzuführende Druckluft wird dabei von einem Abnehmerkanal 440, über den Ventilraum 500 und den Entlüftungsventilsitz 300, hin zum Entlüftungskanal 160 geleitet und verlässt das Magnetventil 10 durch einen ersten und zweiten Entlüftungskanal-Auslass 161,162. Der Aktuator 410 muss dabei entgegen der Kraft der Ventilfeder 420 wirken, um den Ventilraum 500 hin zum Versorgungsventilsitz 400 abzusperren, wie dies anhand von FIG. 2 erläutert wurde.

In der in FIG. 3 in Ansicht (B) dargestellten zweiten Stellung V ist ein Versorgungskanal 430 zu dem Versorgungsventilsitz 400 und dem Ventilraum 500 geöffnet. Abzuführende Druckluft kann von dem Versorgungskanal 430, über den Versorgungsventilsitz 400 und den Ventilraum 500, hin zu einem Abnehmerkanal 440 geleitet werden und verlässt das Magnetventil 10 auf diesem Weg, was der in FIG. 2 dargestellten Schaltung von Versorgungs-Anschluss 1 und Abnehmer-Anschluss 2 entspricht. In dieser Stellung sperrt der Ventilkörper 200 den Ventilraum 500 gegenüber dem Entlüftungsventilsitz 300 ab.

In den beiden in FIG. 3 in Ansicht (A) und Ansicht (B) dargestellten Ventilstellungen ist der Abnehmerkanal 440 unabhängig von der Stellung des Ventilkörpers 200 geöffnet. Je nach der Stellung zur Entlüftung E oder Versorgung V ändert sich die Flussrichtung der zu führenden Druckluft durch den Abnehmerkanal 440, was durch die Leitlinien entsprechend dargestellt ist.

FIG. 4 zeigt den grundlegenden Aufbau des Magnetventils 10, mit einer beispielhaften Abbildung des Diffusors 110 und anhand der Ausgestaltungsform des Entlüftungskanals 160. Der Entlüftungskanal 160 ist in den Gehäusekörper 101 integriert und befindet sich zwischen einer oberen Dichtungsnut 151 und dem zentrisch auf der Ventilachse A1 gelegenen Entlüftungsventilsitz-Durchlass 310, welcher die lichte Weite 311 aufweist. Er wird vom Ventilraum 500 durch eine Wandung 140 abgegrenzt und bildet sich aus zwei Bereichen, wobei aus Gründen der Übersichtlichkeit bei der weiteren Betrachtung lediglich der links von der Ventilachse A1 gelegene Aufbau beschrieben wird. Die rechte Seite des Magnetventils ist in dieser beispielhaften Darstellung genauso aufgebaut.

Der erste Bereich des Entlüftungskanals 160 wird als Diffusor 110 bezeichnet. Dieser bildet sich aus mindestens einem, sich im Querschnitt aufweitenden Diffusorkanal 111,112, ausgehend von der Ventilachse A1, hin zu einer zweiten lichten Weite des Diffusorkanals; die hier mit einer links ersichtlichen zweiten lichten Weite 133 und einer rechts ersichtlichen zweiten lichten Weite 134 dargestellt ist. Der Querschnitt des Diffusorkanals weitet sich dabei entlang eines Diffusorwinkels; der hier mit einem links ersichtlichen Diffusorwinkel 121 und einem rechts ersichtlichen Diffusorwinkel 122 dargestellt ist.

Innerhalb des Entlüftungskanals 160 grenzt unmittelbar an den Diffusor der zweite Bereich des Entlüftungskanals an. Dieser zylindrische Entlüftungskanal-Auslass 161,162 weist die zweite lichte Weite des Diffusorkanals 133,134 auf und wird radial durch die Wandung 140 begrenzt.

In der dargestellten Ausführungsform sind der Diffusor 110 und der Entlüftungskanal 160 orthogonal zur Ventilachse A1 arrangiert, da eine Unterbringung des Mediumsauslasses in axialer Richtung bauraumbedingt die Funktionalität des Magnetventils beeinträchtigt hätte. Insgesamt steht dadurch für den Entlüftungsvorgang eine größere Querschnittsfläche zur Verfügung, als bei herkömmlichen Magnetventilen.

Durch diese konstruktive Lösung ist es möglich, dass das abzuführende Medium nach dem Austritt aus dem Entlüftungsventilsitz 300 senkrecht auf die Wandung des Entlüftungskanals trifft. Dies wird unterstützt durch die Unterbringung eines Strömungs-Prallelementes 620, im Lot des Entlüftungsventilsitz-Durchlasses 310, um den Strömungswiderstand des Magnetventiles so gering wie möglich zu halten. Erfindungsgemäß ist der Strömungswiderstand auch durch ein, an selber Stelle angebrachtes, dornförmiges Strömungs-Leitelement 621 reduziert.

### BEZUGSZEICHENLISTE

- 1: Versorgungs-Anschluss
- 2: Abnehmer-Anschluss
- 3: Entlüftungs-Anschluss
- 10: pneumatisches Magnetventil, insbesondere 3/2-Wegeventil

- 100: pneumatische Ventilvorrichtung
- 101: Gehäusekörper
- 110: Diffusor
- 111: erster Diffusorkanal
- 112: zweiter Diffusorkanal
- 121: erster Diffusorwinkel
- 122: zweiter Diffusorwinkel
- 131: erste lichte Weite des ersten Diffusorkanals
- 132: erste lichte Weite des zweiten Diffusorkanals
- 133: zweite lichte Weite des ersten Diffusorkanals
- 134: zweite lichte Weite des zweiten Diffusorkanals
- 140: Wandung
- 151: obere Dichtungsnut
- 152: untere Dichtungsnut
- 160: Entlüftungskanal
- 161: erster Entlüftungskanal-Auslass
- 162: zweiter Entlüftungskanal-Auslass

- 200: Ventilkörper
- 300: Entlüftungs-Ventilsitz
- 310: Entlüftungs-Ventilsitz-Durchlass
- 311: lichte Weite des Ventilsitzes
- 312: Ventilsitz-Auslass
- 400: Versorgungs-Ventilsitz
- 410: Aktuator
- 420: Ventilfeder
- 430: Versorgungskanal
- 440: Abnehmerkanal
- 500: Ventilraum
- 620: Strömungs-Prallelement
- 621: dornförmiges Strömungs-Leitelement mit Strömungskante
- 700: Pneumatikzylinder
- 710: Erste Druckraum
- 720: Zweite Druckraum
- 800: System aus pneumatischem Magnetventil 10 mit Pneumatikzylinder 700 Drucklufteinrichtung in Form einer Getriebebremse
- 900: Getriebe
- 910: Zahnradzüge
- 920: Bremse
- 930: Druckluftquelle
940

- 1000: Getriebesteuerungs- und Kupplungssystem bei einem Getriebe

- A1: Ventilachse
- ER: Entlüftungsrichtung
- V: Ventil
- E: erste Stellung

## Patentansprüche

1. Pneumatische Ventilvorrichtung (100) für eine Drucklufteinrichtung, insbesondere mit einem Pneumatikzylinder, insbesondere für ein automatisches Kupplungs-System oder ein automatisiertes Getriebesteuerungs- und Kupplungs-System, aufweisend:
- ein pneumatisches Magnetventil (10) mit einem Gehäusekörper (101) mit einem Versorgungskanal (430), einem Abnehmerkanal (440) und einem Entlüftungskanal (160) wobei
- der Gehäusekörper (101) einen Ventilraum (500) umgibt, in dem ein Ventilkörper (200) gegenüber einem Entlüftungs-Ventilsitz (300) zum Entlüftungskanal (160) und einem Versorgungs-Ventilsitz (400) zum Versorgungskanal (430), mittels eines Aktuators, entgegen der Kraft einer Ventilfeder (420), entlang einer Ventilachse (A1) bewegbar ist, wobei
- der Ventilkörper in einer ersten Stellung (E) den Ventilraum (500) und den Entlüftungs-Ventilsitz (300) zu einem Entlüftungskanal (160) öffnet und in einer zweiten Stellung (V) einen Versorgungskanal (430) zu dem Versorgungs- Ventilsitz (400) und dem Ventilraum (500) öffnet,
- der Gehäusekörper (101) einen Diffusor (110) aufweist, der sich an den Entlüftungs-Ventilsitz (300) zum Entlüftungskanal (160) anschließt, wobei sich ein Diffusorkanal (111, 112) des Diffusors (110) vom Entlüftungs-Ventilsitz (300) zum Entlüftungskanal (160) im Querschnitt aufweitet, und
- der Diffusorkanal (111, 112) quer zur Ventilachse (A1) verläuft, und ein Entlüftungs-Ventilsitz-Durchlass (310) eine lichte Weite (311) hat, die geringer ist als eine zweite lichte Weite (133, 134) des Diffusorkanals (111, 112), **dadurch gekennzeichnet, dass** der Diffusorkanal (111, 112)
- einen ersten Abschnitt mit zylindrischer und/oder stumpfer konischer Ausbildung aufweist, und/oder
- einen zweiten Abschnitt mit einer geschwungenen Ausbildung aufweist, und im Diffusorkanal (111, 112)
- gegenüber dem Entlüftungs-Ventilsitz-Durchlass (310) ein Strömungs-Prallelement (620) als ein dornförmiges Strömungs-Leitelement (621) auf der Ventilachse (A1) ausgebildet ist.

2. Ventilvorrichtung nach Anspruch 1, **dadurch gekennzeichnet, dass**
- in der ersten Stellung der Abnehmerkanal (440) über den Ventilraum (500) zum Entlüftungskanal (160) geöffnet ist und der Versorgungs-Ventilsitz (400) geschlossen ist, und
- in der zweiten Stellung der Versorgungskanal (430) über den Ventilraum (500) zum Abnehmerkanal (440) geöffnet ist und der Entlüftungs-Ventilsitz (300) geschlossen ist.

3. Ventilvorrichtung nach Anspruch 1 oder 2, **dadurch gekennzeichnet, dass**
- der Gehäusekörper (101) eine Wandung (140) aufweist, die den Ventilraum (500) umgibt, wobei der Diffusorkanal (111,112) in der Wandung verläuft, sodass der Diffusor (110) im Gehäusekörper (101) integriert ist.

4. Ventilvorrichtung nach einem der vorhergehenden Ansprüche, **dadurch gekennzeichnet, dass**
- der Entlüftungs-Ventilsitz (300) einen Entlüftungs-Ventilsitz-Durchlass (310) mit einer ersten lichten Weite (311) und einen Entlüftungs-Ventilsitz-Auslass (312) mit einer zweiten lichten Weite hat, wobei
- der Entlüftungs-Ventilsitz (300) den Entlüftungs-Ventilsitz-Durchlass (310) und den Entlüftungs-Ventilsitz-Auslass (312) jeweils mit der ersten und der zweiten lichten Weite (311) derselben hat, wobei die erste und die zweite lichte Weite (311) derselben größer ist als eine Belüftungsnennweite des Versorgungskanals (430).

5. Ventilvorrichtung nach einem der vorhergehenden Ansprüche, **dadurch gekennzeichnet, dass** eine erste lichte Weite (131, 132) des Diffusorkanals (111, 112) benachbart zum Entlüftungs-Ventilsitz-Auslass (312) geringer ist als die zweite lichte Weite (133, 134) des Diffusorkanals (111, 112) benachbart zum ersten Auslass (161, 162) des Entlüftungskanals (160).

6. Ventilvorrichtung nach einem der vorhergehenden Ansprüche, **dadurch gekennzeichnet, dass** im Diffusorkanal (111, 112),
- dem Entlüftungs-Ventilsitz-Durchlass (310) gegenüber, eine Innenwand des Diffusorkanals als das Strömungs-Prallelement (620) ausgebildet ist.

7. Ventilvorrichtung nach einem der Ansprüche 1 bis 6, **dadurch gekennzeichnet, dass**
ein Strömungs-Prallelement (620) eine gegen eine Entlüftungsrichtung und zum Entlüftungs-Ventilsitz (300) gerichtete Strömungskante aufweist, insbesondere eine Strömungsspitze oder einen Strömungssteg aufweist.

8. Ventilvorrichtung nach einem der vorhergehenden Ansprüche, **dadurch gekennzeichnet,**
**dass** der Gehäusekörper (101) außenseitig eine obere Dichtungsnut (151) und eine untere Dichtungsnut (152) aufweist, wobei der Diffusor (110) in einer Ebene zwischen der oberen und unteren Dichtungsnut (151, 152) anschließt.

9. Ventilvorrichtung nach einem der vorhergehenden Ansprüche, **dadurch gekennzeichnet,**
**dass** der Diffusorkanal (111, 112) den zweiten Abschnitt mit der geschwungenen Ausbildung in Form eines Horns aufweist.

10. Ventilvorrichtung nach einem der vorhergehenden Ansprüche, **dadurch gekennzeichnet, dass** der Ventilraum (500) entlang der Ventilachse (A1) verläuft und der Diffusorkanal (160) radial mit senkrecht zur Ventilachse ausgerichteten Teilabschnitten verläuft.

11. Ventilvorrichtung nach einem der Ansprüche 1 bis 10, **dadurch gekennzeichnet, dass** der Diffusor wenigstens einen ersten radial ausgerichteten Diffusorkanal (111, 112) entlang eines ersten Diffusorwinkels (121) aufweist, nämlich einen ersten radial ausgerichteten Diffusorkanal (111) entlang eines ersten Diffusorwinkels (121) und einen zweiten radial ausgerichteten Diffusorkanal (112) entlang eines zweiten Diffusorwinkels (122) aufweist, vorzugsweise wobei sich der erste und zweite Diffusorkanal (111,112) symmetrisch zur Ventilachse (A1) gegenüberliegen.

12. Ventilvorrichtung nach einem der Ansprüche 1 bis 10, **dadurch gekennzeichnet, dass** der Diffusorkanal (111, 112) ringförmig um die Ventilachse (A1) angeordnet ist.

13. Ventilvorrichtung nach einem der vorhergehenden Ansprüche, **dadurch gekennzeichnet, dass**
- ein erster Bereich des Entlüftungskanals (160) den Diffusor (110) ausbildet aus mindestens einem sich im Querschnitt aufweitenden Diffusorkanal (111, 112), ausgehend von der Ventilachse (A1), hin zu der zweiten lichten Weite (133, 134) des Diffusorkanals (111, 112), wobei der Querschnitt des Diffusorkanals (111, 112) sich dabei aufweitet entlang eines Diffusorwinkels (121, 122), und
- innerhalb des Entlüftungskanals (160) unmittelbar an den Diffusor (110) ein zweiter Bereich des Entlüftungskanals (160) angrenzt, der als zylindrischer Entlüftungskanal-Auslass (161,162) die zweite lichte Weite (133,134) des Diffusorkanals (111, 112) aufweist und radial durch eine Wandung (140) des Gehäusekörpers (101) begrenzt wird.

14. System (800) aus einem Pneumatikzylinder (700), für eine Drucklufteinrichtung, insbesondere eine Getriebebremse (900) und einer pneumatischen Ventilvorrichtung nach einem der Ansprüche 1 bis 13 mit einem pneumatischen Magnetventil (10) mit einem Gehäusekörper (101) mit einem Versorgungskanal (430), einem Abnehmerkanal (440) und einem Entlüftungskanal (160), wobei der Versorgungskanal (430) des pneumatischen Magnetventils (10) mit einem Druckraum des Pneumatikzylinders (700) zur Entlüftung und Belüftung mit Druckluft verbunden ist, insbesondere zur Entlüftung in der ersten Stellung (E) des Ventilkörpers des Magnetventils (10) und zur Belüftung in der zweiten Stellung (V) des Ventilkörpers des Magnetventils (10).

15. Getriebesteuerungs- oder Kupplungs-System (1000) mit einer pneumatischen Ventilvorrichtung (100) nach einem der Ansprüche 1 bis 13 oder einem System nach Anspruch 14.

## Claims

1. Pneumatic valve apparatus (100) for a compressed air device, in particular comprising a pneumatic cylinder, in particular for an automatic clutch system or an automated transmission control and clutch system, the apparatus comprising:
- a pneumatic solenoid valve (10) comprising a housing body (101) having a supply channel (430), a receiving channel (440) and a vent channel (160),
- the housing body (101) surrounding a valve chamber (500) in which a valve body (200) is movable, by means of an actuator, along a valve axis (A1), against the force of a valve spring (420), relative to a vent valve seat (300) to the vent channel (160) and a supply valve seat (400) to the supply channel (430),
- the valve body opening, in a first position (E), the valve chamber (500) and the vent valve seat (300) to a vent channel (160) and opening, in a second position (V), a supply channel (430) to the supply valve seat (400) and the valve chamber (500),
- the housing body (101) comprising a diffuser (110) which adjoins the vent valve seat (300) to the vent channel (160), a diffuser channel (111, 112) of the diffuser (110) widening in cross-section from the vent valve seat (300) to the vent channel (160), and
- the diffuser channel (111, 112) running transversely to the valve axis (A1), and a vent valve seat passage (310) having a clearance (311) which is smaller than a second clearance (133, 134) of the diffuser channel (111, 112),
**characterized in that** the diffuser channel (111, 112)
- comprises a first portion having a cylindrical and/or blunt conical form, and/or
- comprises a second portion having a curved form,
and in the diffuser channel (111, 112),
- opposite the vent valve seat passage (310), a flow baffle element (620) is formed as a mandrel-shaped flow guide element (621) on the valve axis (A1).

2. Valve apparatus according to claim 1, **characterized in that**
- in the first position, the receiving channel (440) is open to the vent channel (160) via the valve chamber (500), and the supply valve seat (400) is closed, and
- in the second position, the supply channel (430) is open to the receiving channel (440) via the valve chamber (500), and the vent valve seat (300) is closed.

3. Valve apparatus according to claim 1 or claim 2, **characterized in that**
- the housing body (101) comprises a wall (140) which surrounds the valve chamber (500), the diffuser channel (111, 112) running inside the wall so that the diffuser (110) is integrated in the housing body (101).

4. Valve apparatus according to one of the preceding claims, **characterized in that**
- the vent valve seat (300) comprises a vent valve seat passage (310) having a first clearance (311) and a vent valve seat outlet (312) having a second clearance,
- the vent valve seat (300) having the vent valve seat passage (310) and the vent valve seat outlet (312) which have the first and the second clearance (311) thereof, respectively, the first and the second clearance (311) thereof being larger than a nominal aeration width of the supply channel (430).

5. Valve apparatus according to one of the preceding claims, **characterized in that** a first clearance (131, 132) of the diffuser channel (111, 112) adjacent to the vent valve seat outlet (312) is smaller than the second clearance (133, 134) of the diffuser channel (111, 112) adjacent to the first outlet (161, 162) of the vent channel (160).

6. Valve apparatus according to one of the preceding claims, **characterized in that** in the diffuser channel (111, 112),
- opposite the vent valve seat passage (310), an inner wall of the diffuser channel is formed as the flow baffle element (620).

7. Valve apparatus according to one of claims 1 to 6, **characterized in that**
a flow baffle element (620) comprises a flow edge, in particular a flow tip or a flow web, directed against a vent direction and towards the vent valve seat (300).

8. Valve apparatus according to one of the preceding claims, **characterized in that**
the housing body (101) comprises an upper sealing groove (151) and a lower sealing groove (152) on the outside, the diffuser (110) adjoining in a plane between the upper and lower sealing groove (151, 152).

9. Valve apparatus according to one of the preceding claims, **characterized in that**
the diffuser channel (111, 112) comprises the second portion which has the curved form in the shape of a horn.

10. Valve apparatus according to one of the preceding claims, **characterized in that** the valve chamber (500) runs along the valve axis (A1) and the diffuser channel (160) runs radially with segments aligned perpendicular to the valve axis.

11. Valve apparatus according to one of claims 1 to 10, **characterized in that** the diffuser comprises at least a first radially aligned diffuser channel (111, 112) along a first diffuser angle (121), namely a first radially aligned diffuser channel (111) along a first diffuser angle (121) and a second radially aligned diffuser channel (112) along a second diffuser angle (122), the first and second diffuser channel (111, 112) preferably being opposite one another symmetrically to the valve axis (A1).

12. Valve apparatus according to one of claims 1 to 10, **characterized in that** the diffuser channel (111, 112) is arranged in a ring shape around the valve axis (A1).

13. Valve apparatus according to one of the preceding claims, **characterized in that**
- a first region of the vent channel (160) forms the diffuser (110) from at least one diffuser channel (111, 112) which widens in cross-section, starting from the valve axis (A1), towards the second clearance (133, 134) of the diffuser channel (111, 112), the cross-section of the diffuser channel (111, 112) widening along a diffuser angle (121, 122), and
- a second region of the vent channel (160) directly adjoining the diffuser (110) within the vent channel (160), which second region, as a cylindrical vent channel outlet (161, 162), has the second clearance (133, 134) of the diffuser channel (111, 112) and is radially delimited by a wall (140) of the housing body (101).

14. System (800) consisting of a pneumatic cylinder (700) for a compressed air device, in particular for a transmission brake (900), and a pneumatic valve apparatus according to one of claims 1 to 13 comprising a pneumatic solenoid valve (10) having a housing body (101) which has a supply channel (430), a receiving channel (440) and a vent channel (160), the supply channel (430) of the pneumatic solenoid valve (10) being connected to a pressure chamber of the pneumatic cylinder (700) for venting and aerating using compressed air, in particular for venting in the first position (E) of the valve body of the solenoid valve (10) and for aerating in the second position (V) of the valve body of the solenoid valve (10).

15. Transmission control or clutch system (1000) comprising a pneumatic valve apparatus (100) according to one of claims 1 to 13 or a system according to claim 14.

## Revendications

1. Appareillage (100) de vanne pneumatique d'un dispositif à air comprimé, comprenant en particulier un cylindre pneumatique, en particulier pour un système d'embrayage automatique ou un système automatisé de commande de transmission et d'embrayage, comportant :
- une électrovanne (10) pneumatique comprenant un corps (101) ayant un conduit (430) d'alimentation, un conduit (440) d'utilisateur et un conduit (160) d'évent, dans lequel
- le corps (101) entoure un espace (500) de vanne, dans lequel un obturateur (200) peut être déplacé, au moyen d'un actionneur à l'encontre de la force d'un ressort (420) de vanne, suivant un axe (A1) de vanne vers le conduit (160) d'évent sur un siège (300) de vanne d'évent et vers le conduit (430) d'alimentation sur un siège (400) de vanne d'alimentation, dans lequel
- l'obturateur ouvre, dans une première position (E) l'espace (500) de vanne et le siège (300) de vanne d'évent vers un conduit (160) d'évent et, dans une deuxième position (V) de vanne, ouvre un conduit (430) d'alimentation vers le siège (400) de vanne d'alimentation et l'espace (500) de vanne,
- le corps (101) a un diffuseur (110), qui se raccorde au siège (300) de vanne d'évent vers le conduit (160) d'évent, dans lequel un conduit (111, 112) du diffuseur (110) s'élargit en section transversale du siège (300) de vanne d'évent au conduit (160) d'évent, et
- le conduit (111, 112) du diffuseur s'étend transversalement à l'axe (A1) de la vanne et un passage (310) du siège de vanne d'évent a une largeur (311) intérieure, qui est plus petite qu'une deuxième largeur (133, 134) intérieure du conduit (111, 112) de diffuseur,
**caractérisé en ce que** le conduit (111, 112) du diffuseur
- a un premier tronçon de constitution cylindrique et/ou tronc conique, et/ou
- a un deuxième tronçon de constitution incurvée,
et dans le conduit (111, 112) du diffuseur
- il est constitué sur l'axe (A1) de la vanne, en face du passage (310) du siège de vanne d'évent, un élément (620) de déviation du courant sous la forme d'un élément (621) de conduite du courant en forme de mandrin.

2. Appareillage de vanne suivant la revendication 1, **caractérisé en ce que**
- dans la première position, le conduit (440) d'utilisateur est ouvert vers le conduit (160) d'évent en passant par l'espace (500) de vanne et le siège (400) de vanne d'alimentation est fermé, et
- dans la deuxième position, le conduit (430) d'alimentation est ouvert vers le conduit (440) d'utilisateur en passant par l'espace (500) de vanne et le siège (300) de vanne d'évent est fermé.

3. Appareillage de vanne suivant la revendication 1 ou 2, **caractérisé en ce que**
- le corps (101) a une paroi (140), qui entoure l'espace (500) de vanne, dans lequel le canal (111, 112) de diffuseur s'étend dans la paroi, de manière à ce que le diffuseur (110) soit intégré dans le corps (101).

4. Appareillage de vanne suivant l'une des revendications précédentes, **caractérisé en ce que**
- le siège (300) de vanne d'évent a un passage (310) de vanne de siège d'évent ayant une première largeur (311) intérieure et une sortie (312) de vanne de siège d'évent ayant une deuxième largeur intérieure, dans lequel
- le siège (300) de vanne d'évent a le passage (310) de siège de vanne d'évent et la sortie (312) de siège de vanne d'évent ayant respectivement la première et deuxième largeur (311) intérieure des mêmes, dans lequel la première et la deuxième largeur (311) intérieure des mêmes est plus grande qu'une largeur nominale d'alimentation en air du conduit (430) d'alimentation.

5. Appareillage de vanne suivant l'une des revendications précédentes, **caractérisé en ce qu'**une première largeur (131, 132) intérieure du conduit (111, 112) de diffuseur est, au voisinage de la sortie (312) du siège de vanne d'évent, plus petite que la deuxième largeur (133, 134) intérieure du canal (111, 112) de diffuseur au voisinage de la première sortie (161, 162) du conduit (160) d'évent.

6. Appareillage de vanne suivant l'une des revendications précédentes, **caractérisé en ce que**, dans le conduit (111, 112) de diffuseur,
- il est constitué, en face du passage (310) de siège de vanne d'évent, une paroi intérieure du conduit de diffuseur comme élément (620) de déviation du courant.

7. Appareillage de vanne suivant l'une des revendications 1 à 6, **caractérisé en ce qu'**un élément (620) de déviation du courant a un bord d'écoulement dirigé sur une direction d'évent et vers le siège (300) de vanne d'évent, en particulier une pointe d'écoulement ou une nervure d'écoulement.

8. Appareillage de vanne suivant l'une des revendications précédentes, **caractérisé en ce que** le corps (101) a du côté extérieur une rainure (151) d'étanchéité supérieure et une rainure (152) d'étanchéité inférieure, dans lequel le diffuseur (110) se raccorde dans un plan entre la rainure (151) d'étanchéité supérieure et la rainure (152) d'étanchéité inférieure.

9. Appareillage de vanne suivant l'une des revendications précédentes, **caractérisé en ce que** le canal (111, 112) de diffuseur a le deuxième tronçon ayant la constitution incurvée sous la forme d'une corne.

10. Appareillage de vanne suivant l'une des revendications précédentes, **caractérisé en ce que** l'espace (500) de vanne s'étend suivant l'axe (A1) de vanne et le conduit (160) du diffuseur s'étend radialement en ayant des segments partiels dirigés perpendiculairement à l'axe de la vanne.

11. Appareillage de vanne suivant l'une des revendications 1 à 10, **caractérisé en ce que** le diffuseur a au moins un premier conduit (111, 112) de diffuseur dirigé radialement suivant un premier angle (121) de diffuseur, à savoir un premier conduit (111) de diffuseur dirigé radialement suivant un premier angle (121) de diffuseur et un deuxième conduit (112) de diffuseur dirigé radialement suivant un deuxième angle (122) de diffuseur, dans lequel de préférence le premier et le deuxième conduits (111, 112) de diffuseur sont symétriques par rapport à l'axe (A1) de la vanne.

12. Appareillage de vanne suivant l'une des revendications 1 à 10, **caractérisé en ce que** le conduit (111, 112) de diffuseur est disposé annulairement autour de l'axe (A1) de la vanne.

13. Appareillage de vanne suivant l'une des revendications précédentes, **caractérisé en ce que**
- une première partie du conduit (160) d'évent forme le diffuseur (110) composé d'au moins un conduit (111, 112) de diffuseur, s'élargissant en section transversale, à partir de l'axe (A1) de la vanne en allant vers la deuxième largeur (133, 134) intérieure du conduit (111, 112) du diffuseur, dans lequel la section transversale du conduit (111, 112) du diffuseur s'élargit suivant un angle (121, 122) du diffuseur, et
- dans le conduit (160) d'évent est immédiatement contiguë du diffuseur (110) une deuxième partie du conduit (160) d'évent, qui a, comme sortie (161, 162) de conduit d'évent cylindrique, la deuxième largeur (133, 134) intérieure du conduit (111, 112) du diffuseur et qui est délimitée radialement par une paroi (140) du corps (101).

14. Système (800) composé d'un cylindre (700) pneumatique, pour un dispositif à air comprimé, en particulier un frein (900) de transmission et un dispositif de vanne pneumatique suivant l'une des revendications 1 à 13, comprenant une électrovanne (10) pneumatique, comprenant un corps (101) ayant un conduit (430) d'alimentation, un conduit (440) d'utilisateur et un conduit (160) d'évent, dans lequel le conduit (430) d'alimentation de l'électrovanne (10) pneumatique communique avec un espace de refoulement du cylindre (700) pneumatique pour la mise à l'atmosphère et l'alimentation en air comprimé, en particulier la mise à l'atmosphère dans la première position (E) de l'obturateur de l'électrovanne (10) et pour l'alimentation en air dans la deuxième position (V) de l'obturateur de l'électrovanne (10).

15. Système (1000) de commande de transmission ou d'embrayage, comprenant un appareillage (100) de vanne pneumatique suivant l'une des revendications 1 à 13 ou un système suivant la revendication 14.
